# EUROPÄISCHE PATENTSCHRIFT

(11) **EP 2 841 756 B1**
(45) Veröffentlichungstag und Bekanntmachung des Hinweises auf die Patenterteilung: **21.02.2018**
(21) Anmeldenummer: 13713420.1
(22) Anmeldetag: 27.03.2013
(51) Int. Cl.: F02M 55/02, F02M 69/46, F02M 63/00

(54) **HALTER ZUR BEFESTIGUNG EINER KOMPONENTE AN EINER BRENNKRAFTMASCHINE**
HOLDER FOR SECURING A COMPONENT TO AN INTERNAL COMBUSTION ENGINE
SUPPORT DESTINÉ À FIXER UN ÉLÉMENT SUR UN MOTEUR À COMBUSTION INTERNE

(30) Priorität: 26.04.2012 DE 102012206904
(43) Veröffentlichungstag der Anmeldung: 04.03.2015
(73) Patentinhaber: Robert Bosch GmbH, 70442 Stuttgart (DE)
(72) Erfinder: LANG, Klaus, 70439 Stuttgart (DE)
(86) Internationale Anmeldenummer: PCT/EP2013/056573
(87) Internationale Veröffentlichungsnummer: WO 2013/160063

(56) Entgegenhaltungen:
- WO-A1-2010/101693
- WO-A1-2013/063408
- WO-A1-2013/074280
- US-B2- 7 793 639

## Beschreibung

### Stand der Technik

Die Erfindung betrifft einen Halter zur Befestigung zumindest einer Komponente, insbesondere eines Brennstoffverteilers, an einer Brennkraftmaschine. Speziell betrifft die Erfindung das Gebiet der Brennstoffeinspritzanlagen von Brennkraftmaschinen.

Aus der US 7,793,639 B2 ist eine Vorrichtung bekannt, die zur Geräuschreduktion bei einer Brennkraftmaschine in Bezug auf Vibrationen eines Brennstoffverteilers dient. Die Vorrichtung weist eine Halteklammer auf, die zum Befestigen des Brennstoffverteilers an einem Zylinderkopf dient.

Die aus der US 7,793,639 B2 bekannte Vorrichtung hat den Nachteil, dass sich die vorgegebenen Dämpfungseigenschaften mit der Zeit verschlechtern. Dies kann auch zu einem stark erhöhten Verschleiß der Bauteile durch die Vibrationsbelastung des Motors führen.

### Offenbarung der Erfindung

Der erfindungsgemäße Halter mit den Merkmalen des Anspruchs 1 und die erfindungsgemäße Brennstoffeinspritzanlage mit den Merkmalen des Anspruchs 9 haben den Vorteil, dass eine verbesserte Schwingungsdämpfung über die Lebensdauer gewährleistet ist. Hierdurch kann auch eine Begrenzung der Schwingungsbelastung über die Lebensdauer sichergestellt werden. Dadurch kann eine Vorbeugung gegen einen mechanischen Ausfall getroffen werden. Speziell ergibt sich auch der Vorteil, dass eine ausreichende Geräuschdämpfung auch nach einer hohen Betriebsdauer gewährleistet ist.

Durch die in den Unteransprüchen aufgeführten Maßnahmen sind vorteilhafte Weiterbildungen des im Anspruch 1 angegebenen Halters und der im Anspruch 9 angegebenen Brennstoffeinspritzanlage möglich.

Aus der WO 2010/101693 A1 ist bereits ein Halter zur Befestigung eines Werkstücks bekannt. Der Halter zeichnet sich dadurch aus, dass ein Werkstück mittels eines Befestigungsmittels und zwei Verspannbuchsen sowie zweier Entkopplungselemente mit Federeigenschaften in gewünschter Weise eingespannt bzw. verspannt werden kann. Die Entkopplungselemente sind in der Weise ausgeführt, dass jeweils eine metallene Feder einen Kern bildet, die von einer Elastomer/Gummihülle gekapselt ist, wobei die Gummihülle durch Umspritzen/Umgießen des metallenen Federkerns erzeugt wird. Auf diese Weise liegt ein kombiniertes Dämpfungs- und Entkopplungselement in Form einer isolation spring vor, das somit ein Composite-Teil darstellt, wobei zur Vorspannung der Federkern dient und zur Dämpfung das Elastomer der Umhüllung.

Der Halter dient beispielsweise zur Befestigung eines Brennstoffverteilers einer Brennstoffeinspritzanlage an einem Zylinderkopf einer Brennkraftmaschine. Der Brennstoffverteiler dient hierbei als Brennstoffspeicher an der Brennkraftmaschine. Durch Druckschwankungen im Brennstoffverteiler und mit dem Brennstoffverteiler verbundenen Injektoren werden Druckpulsationen induziert, die Geräusche verursachen können. Die Druckpulsationen können unter anderem in Form von Körperschall an den Kontaktpunkten zum Zylinderkopf weitergegeben werden. Zur Dämpfung dient hierbei das Dämpfungselement, das eine Dämpfung an der Schnittstelle zum Zylinderkopf gewährleistet. Durch das Dämpfungselement kann hierbei eine gewisse Entkoppelung erzielt werden.

Das Dämpfungselement ist in vorteilhafter Weise axial vorgespannt. Speziell kann das elastisch verformbare Dämpfungselement hierbei auf der Basis zumindest eines Elastomers ausgebildet sein. Durch solche eine Ausgestaltung werden vorteilhafte Dämpfungseigenschaften erzielt. Allerdings kann über die Lebensdauer ein gewisses Kriechen oder Setzen des Elastomers auftreten, was isoliert betrachtet zur Verringerung der gewünschten Vorspannung des Dämpfungselements führt. Ein Verlust oder im Endzustand ein Nichtvorhandensein der Vorspannung würde zu einem stark erhöhtem Verschleiß der Bauteile durch die Vibrationsbelastung des Motors führen. Dem kann innerhalb gewisser Grenzen durch den Einsatz sehr hochwertiger Elastomere und sehr genau gefertigter Anbauteile entgegen gewirkt werden. Diese Maßnahmen sind möglich, aber mit entsprechend hohen Kosten verbunden. Ferner ist es denkbar, dass zur Minimierung des Setzeffekts die Spannung im Elastomer gering eingestellt wird, was aber einen entsprechend großen Bauraumbedarf mit sich bringt. Die Anforderungen an den Werkstoff des Dämpfungselements, insbesondere des Elastomers, an die Fertigungsgenauigkeit der Anbauteile und an die Größe des Bauraums werden durch das Federelement und dessen Vorspannung erheblich verringert.

Durch die Ausgestaltung mit dem Federelement, das im montierten Zustand vorgespannt ist, wird eine gewünschte Mindestvorspannung des Dämpfungselements sichergestellt. Hierdurch ist die gewünschte Abkopplung auch bei großen Toleranzen der Anbauteile und bei großen Setzeffekten gewährleistet. Das Federelement ist hierfür vorzugsweise als metallisches Federelement ausgestaltet. Speziell ist es vorteilhaft, dass das Federelement als teller- oder wellenförmiges Federelement ausgebildet ist. Das Federelement kann auch als Schraubenfeder ausgestaltet sein. Die Funktion der Vorspannung kann hierdurch in vorteilhafter Weise in das metallische Federelement gelegt werden und die Funktion der Dämpfung kann durch das Dämpfungselement gewährleistet werden. Das metallische Federelement, das die Mindestvorspannung gewährleistet, ist im Unterschied zu dem Dämpfungselement nicht von Setzeffekten betroffen. Damit ist die Funktion über eine sehr hohe Lebensdauer gewährleistet. Die Anforderungen an die Genauigkeit der Anbauteile und an den Werkstoff des Dämpfungselements sinken hierdurch ebenfalls. Hierdurch ist eine Reduzierung der Kosten in Bezug auf eine gewünschte Wirkungsweise möglich. Dies betrifft auch die Ausgestaltung in Bezug auf einen vorgegebenen Bauraum. Speziell kann der benötigte Bauraum reduziert werden.

Vorteilhaft ist es, dass der Haltekörper zwischen dem Dämpfungselement und dem Federelement angeordnet ist. Der Haltekörper kann hierdurch eine vorteilhafte Abstützung einerseits für das Dämpfungselement und andererseits für das Federelement bilden.

Vorteilhaft ist es auch, dass ein weiteres elastisch verformbares Dämpfungselement vorgesehen ist und dass der Haltekörper zwischen dem elastisch verformbaren Dämpfungselement und dem weiteren elastisch verformbaren Dämpfungselement angeordnet ist. Hierdurch kann eine Schwingungsentkopplung weiter verbessert werden, da der Haltekörper entlang der Achse des Befestigungsmittels gewissermaßen in beiden Richtung schwingungsgedämpft ist. Erfindungsgemäß ist es, dass eine Richtgröße des Federelements im unbelasteten Zustand kleiner ist als eine Richtgröße des Dämpfungselements und dass die Richtgröße des Federelements im montierten Zustand größer ist als die Richtgröße des Dämpfungselements. Speziell kann das Federelement bis in seine Endlage vorgespannt werden. In dieser Endlage kann beispielsweise ein teller- oder wellenförmiges Federelement flachgedrückt sein. Unter der Richtgröße des Federelements im unbelasteten Zustand ist insbesondere eine Federkonstante des Federelements im unbelasteten Zustand zu verstehen. Die Richtgröße beschreibt den Zusammenhang zwischen der in axialer Richtung wirkenden Kraft und der hierdurch verursachten Auslenkung aus der Ruhelage beziehungsweise den Zusammenhang der Auslenkung aus der Ruhelage und der rücktreibenden Kraft, die dieser Auslenkung entgegen wirkt. Der Begriff der Richtgröße ist hierbei allgemein zu verstehen, insbesondere sind auch nicht lineare Zusammenhänge zwischen der Kraft und der Auslenkung möglich. Speziell kann die Richtgröße des Dämpfungselements aus dem Elastizitätsmoduls des Dämpfungselements, welcher eine Materialeigenschaft ist, bestimmt werden. Bei einer hohlzylinderförmigen Ausgestaltung des Dämpfungselements ergibt sich die Richtgröße des Dämpfungselements als Quotient mit einem Dividenden, der das Produkt aus dem Elastizitätsmodul und der wirksamen Querschnittsfläche ist, und einem Divisors, der gleich der Länge des Dämpfungselements in der Ausgangslange ist.

Somit sind das Federelement und das Dämpfungselement gewissermaßen in Serie geschaltet. Im unbelasteten Zustand ist die Steifigkeit des Federelements deutlich kleiner als die Steifigkeit des Dämpfungselements. Bei der Montage wird hierdurch zunächst das Federelement zusammengedrückt. Das Federelement wird bei der Montage vorzugsweise auf Block vorgespannt, also bis in seine Endlage zusammengedrückt. Die geringe Steifigkeit des Federelements führt dazu, dass bei bereits vergleichsweise kleinen Kräften große Wege vom Federelement aufgenommen werden. Die zum Zusammendrücken des Federelements auf Block benötigte Kraft stellt dann die geringste Vorspannkraft dar, die das Dämpfungselement dauerhaft sieht. Dies ist insbesondere dann der Fall, wenn im Dämpfungselement eine starke Relaxation auftritt.

Die größere Richtgröße im montierten Zustand kann sich somit insbesondere dadurch ergeben, dass das Federelement auf Block gedrückt ist.

In vorteilhafter Weise sind das elastisch verformbare Dämpfungselement, der Haltekörper und das Federelement hintereinander zwischen einem ersten Spannelement und einem zweiten Spannelement angeordnet. Hierdurch kann eine vorteilhafte Baugruppe gebildet werden, die einfach zu montieren ist. Außerdem sind über die Spannelemente definierte Anlageflächen für einerseits den Haltekörper und andererseits das Federelement vorgegeben. Außerdem kann über die Spannelemente gewährleistet werden, dass das Dämpfungselement, der Haltekörper und das Federelement auf vorgegebene Weise zueinander positioniert sind.

Außerdem ist es vorteilhaft, dass sich durch das elastisch verformbare Dämpfungselement, den Haltekörper und das Federelement eine axiale Bohrung erstreckt, durch die ein Bolzen des Befestigungsmittels hindurch greift. Hierbei ist es ferner vorteilhaft, dass der Bolzen des Befestigungsmittels zumindest ein Gewinde aufweist, das zum Befestigen an der Brennkraftmaschine dient, wobei über ein Einschrauben des Gewindes die Vorspannung des Federelements und die Vorspannung des Dämpfungselements aufbringbar ist. Hierdurch ist eine kompakte Ausgestaltung des Halters möglich. Außerdem wird hierdurch eine vorteilhafte Kraftübertragung und damit eine homogene Spannung sowohl in dem elastisch verformbaren Dämpfungselement als auch in dem Federelement ermöglicht.

### Kurze Beschreibung der Zeichnungen

Bevorzugte Ausführungsbeispiele der Erfindung sind in der nachfolgenden Beschreibung unter Bezugnahme auf die beigefügten Zeichnungen, in denen sich entsprechende Elemente mit übereinstimmenden Bezugszeichen versehen sind, näher erläutert. Es zeigt:
Fig. 1 eine Brennstoffeinspritzanlage mit einem Halter, der zum Befestigen eines Brennstoffverteilers an einer Brennkraftmaschine dient, in einer auszugsweisen, schematischen Schnittdarstellung entsprechend einem ersten Ausführungsbeispiel der Erfindung;
Fig. 2 ein Diagramm zur Erläuterung der Funktionsweise des Halters des ersten Ausführungsbeispiels der Erfindung;
Fig. 3 eine Brennstoffeinspritzanlage mit einem Halter, der zum Befestigen eines Brennstoffverteilers an einer Brennkraftmaschine dient, in einer auszugsweisen, schematischen Schnittdarstellung entsprechend einem zweiten Ausführungsbeispiel der Erfindung und
Fig. 4 eine Brennstoffeinspritzanlage mit einem Halter, der zum Befestigen eines Brennstoffverteilers an einer Brennkraftmaschine dient, in einer auszugsweisen, schematischen Schnittdarstellung entsprechend einem dritten Ausführungsbeispiel der Erfindung.

### Ausführungsformen der Erfindung

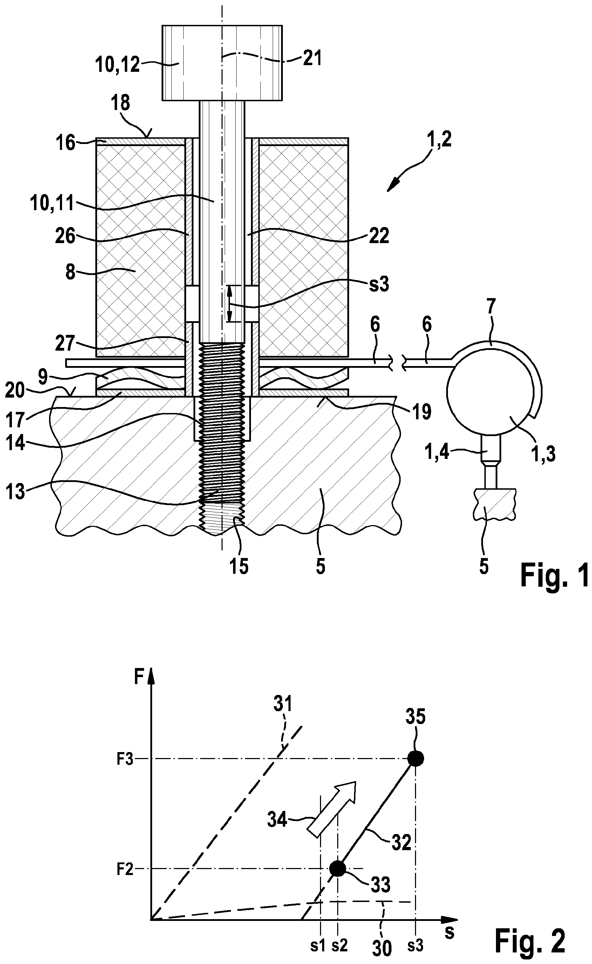

Fig. 1 zeigt eine Brennstoffeinspritzanlage 1 mit einem Halter 2, der zum Befestigen eines Brennstoffverteilers 3 sowie von Injektoren 4 an einer Brennkraftmaschine 5 dient, in einer auszugsweisen, schematischen Schnittdarstellung entsprechend einem ersten Ausführungsbeispiel. Die Brennstoffeinspritzanlage 1 umfasst in diesem Ausführungsbeispiel den Halter 2, den Brennstoffverteiler 3 und mehrere Injektoren 4, von denen in der Fig. 1 nur der Injektor 4 dargestellt ist. Die Brennstoffeinspritzanlage 1 kann auch weitere Komponenten umfassen. In der Fig. 1 ist zur Vereinfachung der Darstellung schematisch ein Zylinderkopf für die Brennkraftmaschine 5 gezeigt. Die Brennstoffeinspritzanlage 1 und die Brennkraftmaschine 5 sind ohne Rücksicht auf einen geeigneten Maßstab oder einheitliche Größenverhältnisse dargestellt.

Der Halter 2 weist einen Haltekörper 6 auf. Eine Aufnahme 7 des Haltekörpers 6 umgreift den Brennstoffverteiler 3, der in diesem Ausführungsbeispiel als rohrförmige Brennstoffverteilerleiste 3 ausgestaltet ist. Hierdurch wird der Brennstoffverteiler 3 an dem Zylinderkopf der Brennkraftmaschine 5 befestigt. Zugleich wird ein zwischen dem Brennstoffverteiler 3 und dem Zylinderkopf der Brennkraftmaschine 5 angeordneter Injektor 4 fixiert.

Der Halter 2 weist außerdem ein elastisch verformbares Dämpfungselement 8 und ein Federelement 9 auf. Außerdem ist ein Befestigungsmittel 10 vorgesehen, das einen Bolzen 11 und einen Kopf 12 aufweist. Der Bolzen 11 weist an seinem Ende 13 ein Gewinde 14 auf. Ferner weist der Zylinderkopf der Brennkraftmaschine 5 eine Gewindebohrung 15 auf, in die das Ende 13 des Bolzens 11 des Befestigungsmittels 10 mit seinem Gewinde 14 eingeschraubt ist.

Das elastisch verformbare Dämpfungselement 8, der Haltekörper 6 und das Federelement 9 sind hintereinander liegend zwischen einem ersten Spannelement 16 und einem zweiten Spannelement 17 angeordnet. In der Fig. 1 ist ein Zustand während der Montage des Halters 2 dargestellt. Durch weiteres Einschrauben des Befestigungsmittels 10 in die Gewindebohrung 15 gelangt der Kopf 12 an eine Oberseite 18 des ersten Spannelements 16. Das zweite Spannelement 17 stützt sich mit einer Stützseite 19 an einer Oberseite 20 des Zylinderkopfs der Brennkraftmaschine 5 ab. Durch weiteres Einschrauben werden das Dämpfungselement 8, der Haltekörper 6 und das Federelement 9, die bezüglich einer Achse 21 des Befestigungsmittels 10 hintereinander liegend angeordnet sind, zwischen den beiden Spannelementen 16, 17 zusammengepresst. Der Haltekörper 6 ist aus einem inkompressiblen Feststoff, insbesondere einem Metall, gebildet. Das Dämpfungselement 8 ist elastisch verformbar ausgestaltet, so dass insbesondere entlang der Achse 21 eine elastische Verformbarkeit besteht. Das Federelement 9 ist vorzugsweise als metallisches Federelement 9 ausgebildet. In diesem Ausführungsbeispiel ist das Federelement 9 zudem als wellenförmiges Federelement 9 ausgestaltet. Hierbei ist auch eine tellerförmige Ausgestaltung des Federelements 9 möglich.

Eine Richtgröße des Federelements 9 im unbelasteten Zustand ist kleiner als eine Richtgröße des Dämpfungselements 8. Beim weiteren Einschrauben des Befestigungsmittels 10 in die Gewindebohrung 5 wird hierdurch zunächst das Federelement 9 zusammengedrückt. Vorzugsweise sind die Richtgröße des Federelements 9 und die Richtgröße des Dämpfungselements 8 im unbelasteten Zustand so aufeinander abgestimmt, dass das Federelement 9 auf Block gedrückt werden kann. Das Federelement 9 wird hierdurch gewissermaßen platt- oder flachgedrückt. Im flachgedrückten Zustand hat das Federelement 9 eine sehr große Richtgröße, die beispielsweise durch das Elastizitätsmodul des metallischen Werkstoffs des Federelements 9 bestimmt ist. Eine weitere Kompression des Federelements 9 ist dadurch nicht möglich. Wenn das Federelement 9 beim Einschrauben gerade flachgedrückt worden ist, dann ist an diesem Punkt das Dämpfungselement 8 lediglich zu einem kleinen Teil vorgespannt. Beim weiteren Einschrauben des Befestigungsmittels 10 wird somit das elastisch verformbare Dämpfungselement 8 vorgespannt. Hierbei kann eine geeignete Vorspannkraft vorgegeben werden, die über das Einschrauben des Gewindes 14 am Ende 13 des Bolzens 11 des Befestigungsmittels 10 in die Gewindebohrung 15 eingestellt werden kann. Insbesondere ist über das Einschrauben des Gewindes 14 in die Gewindebohrung 15 die Vorspannung des Federelements 9 und die Vorspannung des Dämpfungselements 8 aufbringbar.

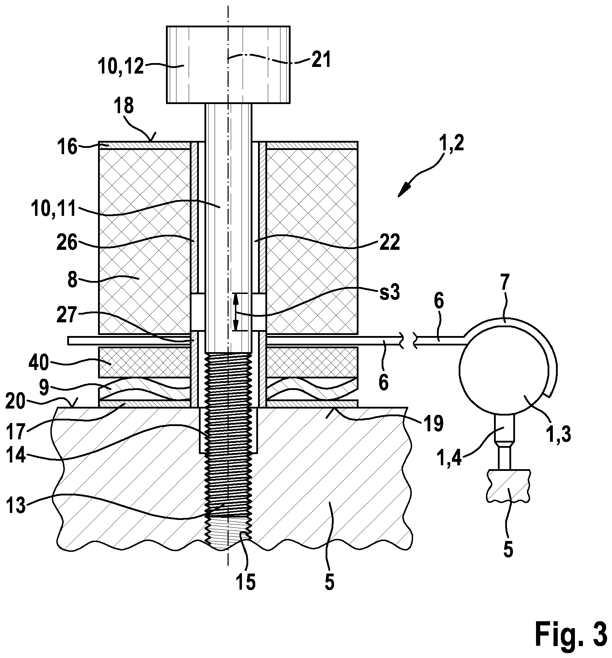

Das elastisch verformbare Dämpfungselement 8, der Haltekörper 6 und das Federelement 9 sind bezüglich der Achse 21 hintereinander liegend angeordnet. Die Reihenfolge ist hierbei nicht festgelegt. Allerdings ist es vorteilhaft, dass der Haltekörper 6 zwischen dem Dämpfungselement 8 und dem Federelement 9 angeordnet ist. Hierdurch ergibt sich eine vorteilhafte Anlage des Dämpfungselements 8 an dem Haltekörper 6. Ferner kann hierdurch eine vorteilhafte Anlage des Federelements 9 an dem Haltekörper 6 erzielt werden. Eine weitere vorteilhafte Ausgestaltung ist auch anhand der Fig. 3 beschrieben.

Durch das elastisch verformbare Dämpfungselement 8, den Haltekörper 6 und das Federelement 9 erstreckt sich eine axiale Bohrung 22. Der Bolzen 11 des Befestigungsmittels 10 greift durch diese axiale Bohrung 22 hindurch. Außerdem weist das erste Spannelement 16 einen hülsenförmigen Teil 26 auf, der sich teilweise durch die axiale Bohrung 22 erstreckt. Ferner weist das zweite Spannelement 17 einen hülsenförmigen Teil 27 auf, der sich ebenfalls teilweise durch die axiale Bohrung 22 erstreckt. In diesem Ausführungsbeispiel liegt das Dämpfungselement 8 innen sowohl an dem hülsenförmigen Teil 26 des ersten Spannelements 16 als auch an dem hülsenförmigen Teil 27 des zweiten Spannelements 17 an. Das Federelement 9 und der Haltekörper 6 liegen innen an dem hülsenförmigen Teil 27 des zweiten Spannelements 17 an. Hierdurch sind die einzelnen Elemente des Halters 2 relativ zu der Achse 21 zueinander positioniert.

Fig. 2 zeigt ein Diagramm zur Veranschaulichung des Funktionsweise des Halters 2 entsprechend dem ersten Ausführungsbeispiel. In dem Diagramm ist an der Abszisse eine Weglänge s zum Vorspannen entlang der Achse 21 angetragen. An der Ordinate ist die Vorspannkraft F in Abhängigkeit dieser Weglänge s angetragen. In dem Diagramm sind eine Kennlinie 30 zur Veranschaulichung der Richtgröße des Federelements 9 bei geringer Belastung, insbesondere im unbelasteten Zustand, und eine Kennlinie 31 zur Veranschaulichung der Richtgröße des Dämpfungselements 8 dargestellt. Bei der Montage des Halters 2 und dem Einschrauben wird zunächst das Federelement 9 entlang der Kennlinie 30 gestaucht, während das Dämpfungselement 8 eine geringe Stauchung entlang der Linie 32 erfährt. Etwa ab der Weglänge s1 ist das Federelement 9 vollständig zusammengedrückt. Die Richtgröße des Federelements ist dadurch größer als die Richtgröße des Dämpfungselements 8. Die Richtgröße des Federelements 9 ist nämlich dann im Wesentlichen durch den Elastizitätsmodul bestimmt. Bei einer weiteren Stauchung wird somit das Dämpfungselement 8 weiter vorgespannt. Diese weitere Stauchung ist durch eine Linie 32 veranschaulicht. Die Linie 32 ergibt sich durch Parallelverschiebung der Kennlinie 31. Wenn die Wegstrecke s2 erreicht wird, dann ergibt sich eine Reaktionskraft F2, die beispielsweise 100 N beträgt. Dies kann einem möglichen Punkt 33 während der Montage entsprechen. Hierbei ist anzumerken, dass sich bei der Montage bis zum Erreichen des Punktes 33 beziehungsweise beim Anziehen des Befestigungsmittels 10 bis zur Wegstrecke s2 auch gewisse Überlagerungen bei der Stauchung des Federelements 9 und der Stauchung des Dämpfungselements 8 ergeben können. Der größte Anteil der Wegstrecke s2 wird allerdings von dem metallischen Federelement 9 aufgebracht, da dieses auf Grund der geringeren Steifigkeit stärker nachgibt. Der große Weg ist geeignet, große Toleranzen der Anbauteile aufzunehmen. Das Dämpfungselement 8 nimmt nur einen geringeren Weganteil auf, so dass die Spannungen im Dämpfungselement 8 im Punkt 33 gering sind und die Setzneigung an diesem Punkt 33 nahe Null ist.

Da das Federelement 9 nun vollständig vorgespannt ist, wird die weitere Kompression von dem Dämpfungselement 8 aufgenommen, was entlang der Linie 32 erfolgt. Dies ist durch einen Pfeil 34 veranschaulicht. Die Vorspannung kann beispielsweise bis zu einem Arbeitspunkt 35 erhöht werden. Hierbei ist während der Vorspannung insgesamt eine Weglänge s3 zurückgelegt worden. Die Weglänge s3 kann durch einen Abstand der hülsenförmigen Teile 26, 27 der Spannelemente 16, 17 begrenzt sein. Die Wegstrecke s3 ist dann zugleich die maximal mögliche Kompressionsstrecke s3. Somit kann der Arbeitspunkt 35 konstruktiv vorgegeben werden, was die Montage erheblich vereinfacht. Das Dämpfungselement 8 ist vorzugsweise so gestaltet, dass in Bezug auf beispielsweise die hohlzylinderförmige Ausgangsform eine relativ geringe Verformung auftritt. Dies kann dadurch erreicht werden, dass die Höhe größer als der Durchmesser des Dämpfungselements ist. Dies ermöglicht auch die Umsetzung der Funktion bei kleinem Durchmesser des Dämpfungselements 8.

Im Arbeitspunkt 35 gewährleistet das Dämpfungselement 8 die gewünschte, dämpfende Funktion. Falls über die Lebensdauer nicht zu verhindernde Setzeffekte im elastischen Material des Dämpfungselement 8 auftreten, dann ist durch das Federelement 9 sichergestellt, dass die Vorspannung nur bis knapp über die Vorspannung des Federelements 9 sinkt. Hierdurch ist dauerhaft sichergestellt, dass eine Mindestvorspannung des Dämpfungselements 8 beziehungsweise des gesamten Verbunds besteht. Dadurch wird ein Abheben des Dämpfungselements 8 und ein damit verbundener Verschleiß sicher verhindert. Daher tritt entlang der Achse 21 über die Lebensdauer kein Spiel auf, das eine ungedämpfte Bewegung des Haltekörpers 6 entlang der Achse 21 ermöglichen würde.

Als weiterer Vorteil kann in vorteilhafter Weise ein vergleichsweise hartes Elastomer zur Ausgestaltung des Dämpfungselements 8 zum Einsatz kommen, was in der Fig. 2 durch eine steile Kennlinie 31 veranschaulicht ist. Im Arbeitspunkt 35 kann sich beispielsweise eine Reaktionskraft in Höhe von 500 N ergeben. Der Toleranzausgleich ist hierbei über das Federelement 9 gewährleistet.

Fig. 3 zeigt eine Brennstoffeinspritzanlage 1 mit einem Halter 2, der zum Befestigen eines Brennstoffverteilers 3 an einer Brennkraftmaschine 5 dient, in einer auszugsweisen, schematischen Schnittdarstellung entsprechend einem zweiten Ausführungsbeispiel. In diesem Ausführungsbeispiel ist ein weiteres elastisch verformbares Dämpfungselement 40 vorgesehen. Hierbei ist der Haltekörper 6 zwischen dem elastisch verformbaren Dämpfungselement 8 und dem weiteren elastisch verformbaren Dämpfungselement 40 angeordnet. Die Dämpfungselemente 8, 40 können beispielsweise auf einem Elastomer basieren. Bei dieser Ausgestaltung können die beiden Dämpfungselemente 8, 40 insbesondere auf dem gleichen Werkstoff, insbesondere dem gleichen Elastomer, basieren. Die Anordnung mit den beiden Dämpfungselementen 8, 40 hat den Vorteil, dass in beiden Richtungen entlang der Achse 21 eine vorteilhafte Dämpfung des Haltekörpers 6 ermöglicht ist.

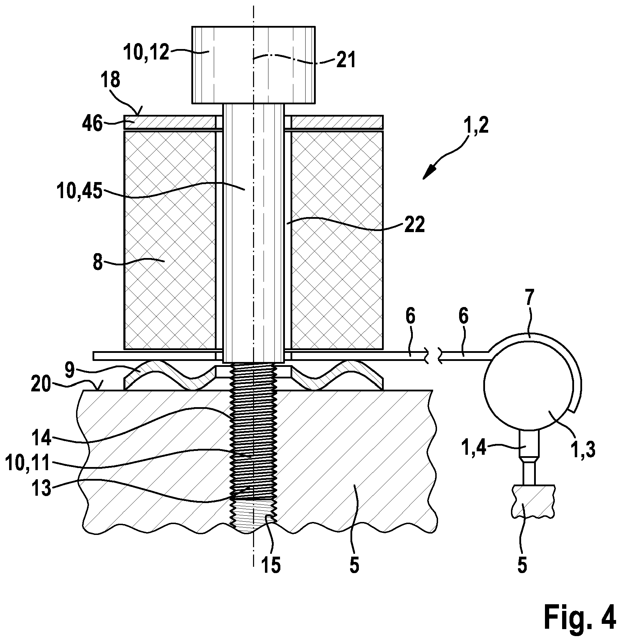

Fig. 4 zeigt eine Brennstoffeinspritzanlage 1 mit einem Halter 2, der zum Befestigen eines Brennstoffverteilers 3 an einer Brennkraftmaschine 5 dient, in einer auszugsweisen, schematischen Schnittdarstellung entsprechend einem dritten Ausführungsbeispiel. In diesem Ausführungsbeispiel weist das Befestigungsmittel 10 einen Bund 45 auf, der zwischen dem Kopf 12 und dem Bolzen 11 mit dem Gewinde 14 vorgesehen ist. Beim Einschrauben des Befestigungsmittels 10 in die Gewindebohrung 15 gelangt der Bund 45 in Anlage mit der Oberseite 20 der Brennkraftmaschine 5. Dadurch ist die Vorspannung des Dämpfungselements 8 im Ausgangszustand begrenzt und definiert vorgegeben. Außerdem kann eine Befestigungskraft, mit der das Befestigungsmittel 10 eingeschraubt ist, dadurch größer als eine Vorspannkraft sein, mit der das Dämpfungselement 8 und das Federelement 9 beaufschlagt werden.

Ferner ist eine Stützplatte 46 vorgesehen, die zwischen dem Kopf 12 des Befestigungsmittels 10 und dem Dämpfungselement 8 angeordnet ist, um eine homogene Beaufschlagung des Dämpfungselements 8 entlang der Achse 21 zu erzielen.

Die Erfindung ist nicht auf die beschriebenen Ausführungsbeispiele beschränkt.

## Patentansprüche

1. Halter (2) zur Befestigung einer Komponente (3), insbesondere eines Brennstoffverteilers (3), an einer Brennkraftmaschine (5) mit zumindest einem elastisch verformbaren Dämpfungselement (8), einem Haltekörper (6) und einem Federelement (9), die bezüglich einer Achse (21) eines Befestigungsmittels (10) hintereinander liegend angeordnet sind, wobei bei einer Montage mittels des Befestigungsmittels (10) eine Vorspannung des Federelements (9) und eine Vorspannung des Dämpfungselements (8) ermöglicht sind,
**dadurch gekennzeichnet,**
**dass** eine Richtgröße des Federelements (9) im unbelasteten Zustand kleiner ist als eine Richtgröße des Dämpfungselements (8) und dass die Richtgröße des Federelements (9) im montierten Zustand größer ist als die Richtgröße des Dämpfungselements (8).

2. Halter nach Anspruch 1,
**dadurch gekennzeichnet,**
**dass** der Haltekörper (6) zwischen dem Dämpfungselement (8) und dem Federelement (9) angeordnet ist.

3. Halter nach Anspruch 1 oder 2,
**dadurch gekennzeichnet,**
**dass** ein weiteres elastisch verformbares Dämpfungselement (40) vorgesehen ist und dass der Haltekörper (6) zwischen dem elastisch verformbaren Dämpfungselement (8) und dem weiteren elastisch verformbaren Dämpfungselement (40) angeordnet ist.

4. Halter nach einem der Ansprüche 1 bis 3,
**dadurch gekennzeichnet,**
**dass** das Federelement (9) als metallisches Federelement (9) und/oder als teller- und/oder wellenförmiges Federelement (9) ausgebildet ist oder
**dass** das Federelement (9) als Schraubenfeder ausgestaltet ist.

5. Halter nach einem der Ansprüche 1 bis 4,
**dadurch gekennzeichnet,**
**dass** das elastisch verformbare Dämpfungselement (8), der Haltekörper (6) und das Federelement (9) hintereinander liegend zwischen einem ersten Spannelement (16) und einem zweiten Spannelement (17) angeordnet sind.

6. Halter nach einem der Ansprüche 1 bis 5,
**dadurch gekennzeichnet,**
**dass** sich durch das elastisch verformbare Dämpfungselement (8), den Halterkörper (6) und das Federelement (9) eine axiale Bohrung (22) erstreckt, durch die ein Bolzen (11) des Befestigungsmittels (10) hindurch greift.

7. Halter nach Anspruch 6,
**dadurch gekennzeichnet,**
**dass** der Bolzen (11) des Befestigungsmittels (10) zumindest ein Gewinde (14) aufweist, das zum Befestigen an der Brennkraftmaschine (5) dient, wobei über ein Einschrauben des Gewindes (14) die Vorspannung des Federelements (9) und die Vorspannung des Dämpfungselements (8) aufbringbar sind.

8. Halter nach einem der Ansprüche 1 bis 7,
**dadurch gekennzeichnet,**
**dass** das elastisch verformbare Dämpfungselement (8) auf der Basis zumindest eines Elastomers ausgebildet ist.

9. Brennstoffeinspritzanlage (1) mit einem Brennstoffverteiler (3) und zumindest einem Halter (2) nach einem der Ansprüche 1 bis 8, der zum Befestigen des Brennstoffverteilers (3) an einer Brennkraftmaschine (5) dient.

## Claims

1. Holder (2) for the fastening of a component (3), in particular a fuel distributor (3), to an internal combustion engine (5), having at least one elastically deformable damping element (8), a holding body (6) and a spring element (9) which are arranged so as to be situated one behind the other with respect to an axis (21) of a fastening means (10), wherein, during an installation process, a preload of the spring element (9) and a preload of the damping element (8) are made possible by the fastening means (10),
**characterized**
**in that** a reference size of the spring element (9) in the unloaded state is smaller than a reference size of the damping element (8), and in that the reference size of the spring element (9) in the installed state is larger than the reference size of the damping element (8).

2. Holder according to Claim 1,
**characterized**
**in that** the holding body (6) is arranged between the damping element (8) and the spring element (9).

3. Holder according to Claim 1 or 2,
**characterized**
**in that** a further elastically deformable damping element (40) is provided, and in that the holding body (6) is arranged between the elastically deformable damping element (8) and the further elastically deformable damping element (40).

4. Holder according to one of Claims 1 to 3,
**characterized**
**in that** the spring element (9) is formed as a metallic spring element (9) and/or as a plate-like and/or undulating spring element (9), or in that the spring element (9) is formed as a helical spring.

5. Holder according to one of Claims 1 to 4,
**characterized**
**in that** the elastically deformable damping element (8), the holding body (6) and the spring element (9) are arranged so as to be situated one behind the other between a first clamping element (16) and a second clamping element (17).

6. Holder according to one of Claims 1 to 5,
**characterized**
**in that** an axial bore (22) extends through the elastically deformable damping element (8), the holding body (6) and the spring element (9), through which axial bore a bolt (11) of the fastening means (10) extends.

7. Holder according to Claim 6,
**characterized**
**in that** the bolt (11) of the fastening means (10) has at least one thread (14) which serves for the fastening to the internal combustion engine (5), wherein the preload of the spring element (9) and the preload of the damping element (8) can be imparted by screwing in the thread (14).

8. Holder according to one of Claims 1 to 7,
**characterized**
**in that** the elastically deformable damping element (8) is formed on the basis of at least one elastomer.

9. Fuel injection system (1) having a fuel distributor (3) and having at least one holder (2) according to one of Claims 1 to 8, which serves for the fastening of the fuel distributor (3) to an internal combustion engine (5).

## Revendications

1. Support (2) pour la fixation d'un composant (3), en particulier d'un répartiteur de combustible (3), sur un moteur (5) à combustion interne, le support présentant au moins un élément élastiquement déformable d'amortissement (8), un corps de maintien (6) et un élément élastique (9) disposés les uns derrière les autres suivant un axe (21) du moyen de fixation (10), une précontrainte de l'élément élastique (9) et une précontrainte de l'élément d'amortissement (8) étant rendues possibles lors du montage, au moyen de l'élément de fixation (10),
**caractérisé en ce que**
la grandeur d'orientation de l'élément élastique (9) à l'état non sollicité est inférieure à la grandeur d'orientation de l'élément d'amortissement (8) et
**en ce que** la grandeur d'orientation de l'élément élastique (9) à l'état monté est supérieure à la grandeur d'orientation de l'élément d'amortissement (8).

2. Support selon la revendication 1, **caractérisé en ce que** le corps de support (6) est disposé entre l'élément d'amortissement (8) et l'élément élastique (9).

3. Support selon les revendications 1 ou 2, **caractérisé en ce qu'**un autre élément élastiquement déformable d'amortissement (40) est prévu et **en ce que** le corps de maintien (6) est disposé entre l'élément élastiquement déformable d'amortissement (8) et l'autre élément élastiquement déformable d'amortissement (40).

4. Support selon l'une des revendications 1 à 3, **caractérisé en ce que** l'élément élastique (9) est configuré comme élément élastique métallique (9) et/ou comme élément élastique (9) en forme de plateau ou ondulé, ou **en ce que** l'élément élastique (9) est configuré comme ressort hélicoïdal.

5. Support selon l'une des revendications 1 à 4, **caractérisé en ce que** l'élément élastiquement déformable d'amortissement (9), le corps de maintien (6) et l'élément élastique (9) sont disposés les uns derrière les autres entre un premier élément de serrage (16) et un deuxième élément de serrage (17).

6. Support selon l'une des revendications 1 à 5, **caractérisé en ce qu'**un alésage axial (22) traversé par un goujon (11) du moyen de fixation (10) s'étend dans l'élément élastiquement déformable d'amortissement (8), le corps de maintien (6) et l'élément élastique (9).

7. Support selon la revendication 6, **caractérisé en ce que** le goujon (11) du moyen de fixation (10) présente au moins un filet (14) servant à la fixation sur le moteur (5) à combustion interne, le vissage du filet (14) permettant d'appliquer la précontrainte de l'élément élastique (9) et la précontrainte de l'élément d'amortissement (8).

8. Support selon l'une des revendications 1 à 7, **caractérisé en ce que** l'élément élastiquement déformable d'amortissement (8) est réalisé sur la base d'au moins un élastomère.

9. Installation (1) d'injection de carburant présentant un répartiteur de carburant (3) et au moins un support (2) selon l'une des revendications 1 à 8, qui sert à fixer le répartiteur de carburant (3) sur un moteur (5) à combustion interne.
